**Europäisches Patentamt**

**European Patent Office**

**Office européen des brevets**

(19)

(11) Veröffentlichungsnummer : **0 071 562**
**B1**

(12)

# EUROPÄISCHE PATENTSCHRIFT

(45) Veröffentlichungstag der Patentschrift :
**26.03.86**

(51) Int. Cl.⁴ : **H 02 K   7/18**, H 02 K 19/16

(21) Anmeldenummer : **82730091.4**

(22) Anmeldetag : **30.06.82**

(54) **Elektrische Maschine.**

(30) Priorität : **30.07.81 DE 3130640**

(43) Veröffentlichungstag der Anmeldung :
**09.02.83 Patentblatt 83/06**

(45) Bekanntmachung des Hinweises auf die Patenterteilung : **26.03.86 Patentblatt 86/13**

(84) Benannte Vertragsstaaten :
**CH DE FR GB LI NL SE**

(56) Entgegenhaltungen :
**DE-C-   833 979**
**DE-C-   965 878**
**GB-A-   456 039**
**GB-A- 2 023 352**
**GB-A- 2 030 376**
**US-A- 1 736 551**
**US-A- 2 488 392**
**US-A- 2 799 782**

(73) Patentinhaber : **Siemens Aktiengesellschaft**
**Berlin und München Wittelsbacherplatz 2**
**D-8000 München 2 (DE)**

(72) Erfinder : **Haubenreisser, Kurt**
**Grazer Damm 170**
**D-1000 Berlin 41 (DE)**
Erfinder : **Röder, Lothar**
**Manteuffelstrasse 28 A**
**D-1000 Berlin 42 (DE)**

EP 0 071 562 B1

Jouve, 18, rue St-Denis, 75001 Paris, France

## Beschreibung

Die Erfindung bezieht sich auf einen elektrischen Generator synchroner Bauart, der ohne eigene Lager ausgeführt und unmittelbar an seine Antriebsmaschine gekuppelt ist, derart, daß der innenliegende Läufer mit dem Tragkörper der Pole fliegend an den außerhalb des Gehäuses der Antriebsmaschine liegenden Flansch eines freien Wellenendes der Antriebsmaschine und der außenliegende Ständer über einen Tragring an das Gehäuse der Antriebsmaschine angeschlossen ist, und bei dem der Erregerstrom für die auf der äußeren Mantelfläche des Tragkörpers angeordneten Pole über am Ständer befestigte Bürsten auf an einem mittigen Ansatz des Tragkörpers befindliche Schleifringe übertragen wird.

Ein derartiger Generator synchroner Bauart ist aus der US-PS 27 99 782 bekannt. Es handelt sich hierbei um einen Generator für ein Schienenfahrzeug, insbesondere einem Kühlwagen, der durch die Kolbenwelle einer Dieselmaschine angetrieben wird. Diese Dieselmaschine und der Generator sind in einem besonderen, verschiebbaren Gehäuse unterhalb des Wagenbodens angeordnet. Dieser Generator ist ohne eigene Lager ausgeführt und unmittelbar an seine Antriebsmaschine gekuppelt. Sein Läuferaufbau ist jedoch sehr kompliziert. An dem Flansch der Kolbenwelle der Antriebsmaschine ist über einen entsprechenden Flansch ein konischer Wellenstumpf befestigt. Der Befestigungsflansch dieses Wellenstumpfes trägt außerdem ein Schwungrad. Der konische Wellenstumpf ragt in eine entsprechend konisch ausgebildete Hohlwelle hinein und ist mit dieser mit einer Paßfeder verkeilt. Als zusätzliche Verklammerung dient ein zentraler Gewindebolzen. Der Hohlwellenstumpf trägt auf seinem oberhalb des Wellenstumpfes liegenden Teil die Schenkelpole des Generators. Sein verlängertes darüber hinausragendes freies Ende ist mit Schleifringen versehen, auf denen Bürsten aufliegen, die am schildartigen Abschluß des Ständers befestigt sind. Die Bürsten liegen also in axialer Richtung neben den Schenkelpolen in einem besonderen durch den eingezogenen Schild des Ständers und einem weiteren Deckel gebildeten abgeschlossenen Raum, damit der Bürstenstaub nicht in das Maschineninnere eindringt. Durch diesen besonderen Aufbau der Läuferwelle ist sowohl die Fertigung als auch die Montage sehr kompliziert und aufwendig. Auch die axiale Baulänge der Maschine ist verhältnismäßig groß.

Weiterhin ist in der US-PS 17 36 551 eine elektrische Maschine beschrieben, bei welcher der Tragkörper des Läufers aus einem Armstern mit einseitig angesetztem Mantelring ausgebildet ist. Dieser Tragkörper trägt auf der Innenwand des Mantelringes die Pole der Maschine in synchroner Bauart, denn es handelt sich um eine elektrische Außenpolmaschine. Diese Maschine synchroner Bauart ist als Antriebsmotor für den Kompressor eines Kühlaggregates vorgesehen. Die elektrische Maschine hat zwar kein eigenes Lager, ist aber unmittelbar neben einem Lager für die Welle angeordnet, dieses ragt zum Teil auch noch in den Innenraum des Ständers hinein. Der Ständer ist übrigens mit Hilfe eines Armsternes mit ebenfalls einseitigem Mantelring an dem Lagergehäuse befestigt. Die Antriebswelle durchsetzt einen mittleren inneren Ansatz des Tragkörpers des Läufers, der als Nabenkörper ausgebildet ist. Die zur Zuführung des Erregerstromes für die Pole dienenden Schleifringe sind von Armen gehalten, die an den Armen des Tragkörpers befestigt sind. Entsprechend werden die dazu gehörigen Bürsten von an den Armstern des Ständers gelagerten Bolzen getragen. Die axiale Baulänge der bekannten Maschine ist verhältnismäßig kurz, da Bürsten und Schleifringe innerhalb der axialen Baulänge des Ständers liegen.

Ferner ist aus der GB-A-456 039 ein elektrischer Generator eines Kraftfahrzeuges bekannt, der ohne eigene Lager ausgeführt und unmittelbar an den Verbrennungsmotor des Kraftfahrzeuges gekuppelt ist, derart, daß der innenliegende Läufer fliegend an ein freies Wellenende und der außenliegende Ständer über einen Tragring an das Gehäuse dieser Antriebsmaschine angeschlossen ist, wobei der Tragkörper der Läuferwicklung ein Glockenkörper ist.

Bei dem bekannten Generator handelt es sich um eine ständerseitig erregte Gleichstrommaschine mit Kommutatorwicklung am Läufer. Der Kommutator und die dazugehörigen nicht dargestellten Bürsten liegen außerhalb des glockenförmigen Tragkörpers der Läuferwicklung. Innerhalb des glockenförmigen Tragkörpers liegt eine ausrückbare Trockenkupplung, und der glockenförmige Tragkörper dient gleichzeitig als Kupplungsgehäuse. Der glockenförmige Tragkörper weist einen ebenfalls glockenförmigen Flanschansatz auf, der in das freie Wellenende der Antriebsmaschine eingelassen ist. Dadurch liegt der Schwerpunkt des Läufers weit vom Lager der Antriebsmaschine entfernt, wodurch die Belastung des Lagers, insbesondere durch Biegemomente, groß ist.

Der vorliegenden Erfindung liegt die Aufgabe zugrunde, den Platzbedarf, insbesondere die axiale Baulänge bei einem elektrischen Generator synchroner Bauart der eingangs beschriebenen Art zu verringern.

Zur Lösung dieser Aufgabe ist gemäß der Erfindung der elektrische Generator so ausgebildet, daß der Tragkörper ein Glockenkörper ist, dessen ebene Stirnwand an den Flansch des Wellenendes der Antriebsmaschine angeflanscht ist und daß der mittige Ansatz des Tragkörpers, auf dem die Schleifringe zur Übertragung des Erregerstromes liegen, innerhalb des Glockenkörpers liegt. Weil der Glockenkörper mit seiner ebenen Stirnwand an den Flansch des Wellenendes angeflanscht ist, ist der Abstand des Schwerpunktes des Läufers vom Lager der Antriebsmaschine gering, so daß das Lager nur wenig durch Biegemomente des Läufers belastet ist. Wegen der verschachtelten Anordnung der Schleifringe im Läufer wird der Platzbedarf, insbesondere die axiale Baulänge der Maschine sehr gering gehalten. Die Glockenform des Tragkörpers für den Läufer ergibt aber trotzdem die notwendige mechanische Steifigkeit. Da das Gehäuse der Antriebsmaschine den Ständer des Generators trägt, ist somit für diesen kein eigenes Fundament erforderlich.

Diese Bauform kann mit besonderem Vorteil eingesetzt werden, wenn der Generator zur Versorgung des Bordnetzes eines Schiffes dient und der Ständer des Generators an das Gehäuse des Schiffsdieselmotors und der Läufer an die Kurbelwelle des Schiffsdieselmotors angekuppelt ist. Gerade bei Schiffen ist die Einsparung an axialer Baulänge zur Gewinnung zusätzlichen Nutzraumes sehr wichtig. Da die Gehäuse der Schiffsdieselmotoren im allgemeinen sehr groß sind, kann der aktive Durchmesser des Generators verhältnismäßig groß ausgeführt werden, so daß für die Erzeugung der gewünschten Generatorleistung dadurch nur eine geringere axiale Länge der Maschine benötigt wird.

Der Generator kann dann mit Vorteil als Rundpol- oder als kurzer Langpolgenerator ausgeführt werden.

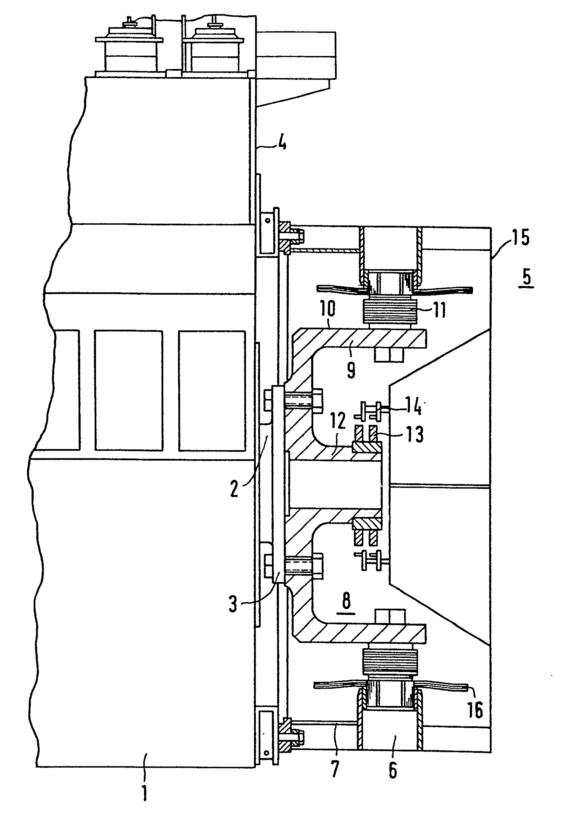

Im folgenden sei die Erfindung noch anhand des in der Figur dargestellten Ausführungsbeispiels erläutert. Diese zeigt schematisch einen Längsschnitt durch einen gemäß der Erfindung ausgebildeten Generator und einen Teil der Antriebsmaschine.

Der Schiffsdieselmotor 1 treibt mit der Kurbelwelle 2 die Propellerwelle eines Schiffes an. Das zweite freie Wellenende der Kurbelwelle 2 ragt mit einem Flansch 3 über die äußere Stirnwand 4 des Schiffsdieselmotors 1 hinaus. Zur Versorgung des Schiffsbordnetzes mit elektrischer Leistung dient der Generator 5 synchroner Bauart, der fliegend an den Schiffsdieselmotor 1 angekuppelt ist. Zu diesem Zweck ist der Ständer 6 des Generators 5 über einen Tragring 7 an der äußeren Stirnwand 4 des Schiffsdieselmotors 1 befestigt. Der Läufer 8 besteht im wesentlichen aus einem Glockenkörper 9, auf dessen äußerer Mantelfläche 10 die Rundpole 11 mit der Erregerwicklung angeordnet sind. Der Glockenkörper 9 ist an den Flansch 3 der Kurbelwelle 2 angeflanscht. Der Glockenkörper 9 weist außerdem einen mittigen inneren Ansatz 12 auf, auf dem die Schleifringe 13 für die Zuführung des Erregerstromes liegen. Die Stromzuführungselemente 14, wie Bürstenträger und Bürsten, für den als Erregerstrom dienenden Gleichstrom sind ihrerseits auf einem Abdeckschild 15 befestigt, der die äußere Stirnseite des Generators 5 verschließt und in das Innere des Glockenkörpers 9 gezogen ist.

Die Abmessungen des Ständers 6 des Generators 5 sind so gewählt, daß angenähert die gesamte Höhe zwischen dem Fundament des Schiffsdieselmotors 1 und der Mitte der Kurbelwelle 2 ausgenutzt werden kann. Der aktive Durchmesser des Generators 5 ist dadurch entsprechend groß, so daß die axiale Baulänge des Generators 5 klein gehalten werden kann und im wesentlichen von der Ausladung der Ständerwicklung 16 bestimmt wird. Eigene Lager für den Generator 5 sind nicht erforderlich, denn das Gewicht des Läufers 8 wird vom Lager des Schiffsdieselmotors 1 aufgenommen. Die Montage des Generators ist verhältnismäßig einfach, da die jeweiligen Befestigungsmittel in axialer Richtung liegen und leicht zugänglich sind.

## Patentansprüche

1. Elektrischer Generator (5) synchroner Bauart, der ohne eigene Lager ausgeführt und unmittelbar an seine Antriebsmaschine (1) gekuppelt ist, derart, daß der innenliegende Läufer (8) mit dem Tragkörper der Pole (11) fliegend an den außerhalb des Gehäuses der Antriebsmaschine (1) liegenden Flansch (3) eines freien Wellenendes der Antriebsmaschine (1) und der außenliegenden Ständer (6) über einen Tragring (7) an das Gehäuse der Antriebsmaschine (1) angeschlossen ist, und bei dem der Erregerstrom für die auf der äußeren Mantelfläche (10) des Tragkörpers angeordneten Pole (11) über am Ständer (6) befestigte Bürsten (14) auf an einem mittigen Ansatz (12) des Tragkörpers befindliche Schleifringe (13) übertragen wird, dadurch gekennzeichnet, daß der Tragkörper ein Glockenkörper (9) ist, dessen ebene Stirnwand an den Flansch (3) des Wellenendes der Antriebsmaschine (1) angeflanscht ist und daß der mittige Ansatz (12) des Tragkörpers, auf dem die Schleifringe (13) zur Übertragung des Erregerstromes liegen, innerhalb des Glockenkörpers (9) liegt.

2. Elektrischer Generator nach Anspruch 1, dadurch gekennzeichnet, daß der Generator (5) zur Versorgung des Bordnetzes eines Schiffes dient und däß der Ständer (6) an das Gehäuse des Schiffsdieselmotors (1) und der Läufer (8) an die Kurbelwelle (2) des Schiffsdieselmotors (1) angekuppelt ist.

3. Elektrischer Generator nach Anspruch 1 oder 2, dadurch gekennzeichnet, daß die äußere Stirnseite des Generators (5) durch einen Abdeckschild (15) verschlossen ist, der in das Innere des Glockenkörpers (9) gezogen ist und auf der der Antriebsmaschine zugewandten Seite die Stromzuführungselemente (14) für die Schleifringe (13) trägt.

4. Elektrischer Generator nach Anspruch 1 oder 2, dadurch gekennzeichnet, daß der Generator (5) mit Rundpolen (11) versehen ist.

## Claims

1. An electrical generator (5) of synchronous construction which is designed without its own bearing and which is directly coupled to its driving engine (1) in such a manner that the inner rotor (8) together with the carrier body for the pole (11) is connected to the overhanging flange (3) on the outside of the housing of the driving engine (1), which flange is located on a free shaft end of the driving engine (1) and the outer stator (6) is connected via a supporting ring (7) to the housing of the driving engine (1), and wherein the excitation current for the poles (11), which are arranged on the outer sheath surface (10) of the supporting body, is transferred to slip rings (13) disposed on a central attachment (12) of the supporting body by means of brushes (14) which are fixed on the stator (6), characterised in that the carrier body is a bell-shaped body (9), whose plane end wall is flanged to the flange (3) of the shaft end of the driving engine (1), and in that the central attachment (12) of the carrier body, on which the slip rings (13) for the transfer of the excitation current are arranged, lies inside the bell-shaped body (9).

2. An electrical generator as claimed in claim 1, characterised in that the generator (5) serves to supply the electrical system of a ship and that the stator (6) is coupled to the housing of the ship's diesel engine (1) and the rotor (8) is coupled to the crankshaft (2) of the ship's diesel engine (1).

3. An electrical generator as claimed in claim 1 or 2, characterised in that the outer end face of the generator (5) is sealed by a cover plate (15) which is positioned inside of the bell-shaped body (9) and which supports the current supply elements (14) for the sliding rings (13) on the side facing the driving engine.

4. An electrical generator as claimed in claim 1 or 2, characterised in that the generator (5) is provided with round poles (11).


**Revendications**

1. Génératrice électrique (5) du genre de construction synchrone qui est réalisée sans paliers et qui est accouplée directement à sa machine d'entraînement (1) de telle façon que le rotor (8), situé à l'intérieur, est, y compris le corps de support des pôles (11), relié en porte-à-faux au flasque (3), situé à l'extérieur du carter de la machine d'entraînement (1), d'une extrémité d'arbre libre de cette dernière, et que le stator (6), situé à l'extérieur, est relié par l'intermédiaire d'un anneau-porteur (7) au carter de la machine d'entraînement, et dans laquelle le courant d'excitation pour les pôles (11) disposés sur la paroi latérale extérieure (10) du corps de support, est transmis, par des balais (14) fixés au stator (6), à des bagues collectrices (13) qui se trouvent sur un appendice médian (12) du corps de support, caractérisée par le fait que le corps de support est un corps en cloche (9) dont la paroi frontale plane est bridée sur le flasque (3) de l'extrémité de l'arbre de la machine d'entraînement (1), et que l'appendice médian (12) du corps de support sur lequel reposent les bagues collectrices (13) servant à la transmission du courant d'excitation, est situé à l'intérieur du corps en cloche (9).

2. Génératrice électrique selon la revendication 1, caractérisée par le fait que la génératrice (5) sert à l'alimentation du réseau de bord d'un bateau, et que le stator (6) est accouplé au carter du moteur Diesel (1) du bateau, alors que rotor (8) est accouplé au vilebrequin (2) du moteur Diesel (1) du bateau.

3. Génératrice électrique selon la revendication 1 ou 2, caractérisée par le fait que le côté frontal extérieur de la génératrice (5) est obturé par un couvercle (15) qui se prolonge à l'intérieur du corps en cloche (9) et qui porte, sur le côté, tourné vers la machine d'entraînement, les éléments d'amenée du courant (14) pour les bagues collectrices (13).

4. Génératrice électrique selon la revendication 1 ou 2, caractérisée par le fait que la génératrice est pourvue de pôles ronds (11).